# EUROPEAN PATENT SPECIFICATION

(11) **EP 1 462 912 B1**
(45) Date of publication and mention of the grant of the patent: **03.01.2007**
(21) Application number: 03075865.0
(22) Date of filing: 25.03.2003
(51) Int. Cl.: G06F 1/16, H04M 1/02, G06F 3/02

(54) **Extractable terminal keypad**
Herausziehbare Endgerättastatur
Clavier de terminal extractible

(43) Date of publication of application: 29.09.2004
(73) Proprietor: Sony Ericsson Mobile Communications AB, 221 88 Lund (SE)
(72) Inventor: Hermann, Fredrik, 217 54 Malmo (SE)
(74) Representative: Lindberg, Olle Nils Olof

(56) References cited:
- WO-A-00/54479
- WO-A-01/35202
- DE-A- 19 546 786
- DE-U- 29 512 756
- US-A1- 2001 003 450

## Description

### Field of the invention

The present invention relates to data input devices for data communication or processor terminals, such as mobile phones and computers. In particular the invention relates to keypad devices for such terminals.

### Background

Since the end of the 20^{th} century the cellular telephone industry has had enormous development in the world. From the initial analog systems, such as those defined by the standards AMPS (Advanced Mobile Phone System) and NMT (Nordic Mobile Telephone), the development has during recent years been almost exclusively focused on standards for digital solutions for cellular radio network systems, such as D-AMPS (e.g., as specified in EIA/TIA-IS-54-B and IS-136) and GSM (Global System for Mobile Communications). Different digital transmission schemes are used in different systems, e.g. time division multiple access (TDMA) or code division multiple access (CDMA). Currently, the cellular technology is entering the so called 3^{rd} generation, providing several advantages over the former, 2^{nd} generation, digital systems referred to above. Among those advantages an increased bandwidth will be provided, allowing effective communication of more complex data. The 3^{rd} generation of mobile systems have been referred to as the UMTS (Universal Mobile Telephony System) in Europe and CDMA2000 in the USA, and is already implemented in Japan to some extent. Furthermore, it is widely believed that the first generation of Personal Communication Networks (PCNs), employing low cost, pocket-sized, cordless telephones that can be carried comfortably and used to make or receive calls in the home, office, street, car, etc., will be provided by, for example, cellular carriers using the next generation digital cellular system infrastructure.

A lot of effort has been made in making smaller terminals, with much help from the miniaturisation of electronic components and the development of more efficient batteries. In only a couple of decades the communication systems have gone from analogue to digital, and at the same time the dimensions of the communication terminals have gone from briefcase size to the pocket size phones of today. Today, numerous manufacturers offer pocket-sized terminals with a wide variety of capabilities and services, such as packet-oriented transmission and multiple radio band coverage. Still today, mobile phones are getting smaller and smaller and the size is generally considered to be an important factor for the end customer. The development in electronics has made it possible to miniaturise the components of the terminals, at the same time making the terminals capable of performing more advanced functions and services. The development of new transmission schemes, the so-called 3^{rd} generation mobile system standing at the door and the 4^{th} generation to be expected maybe ten years later, also provides the possibility to convey more advanced data to the wireless communication terminals, such as real time video.

The end users have a number of conflicting requirements on the mobile phones. Basically, the terminal should be as small and light-weight as possible. Furthermore, it should provide more and more advanced functions, have a long battery time, and a user-friendly interface. As technology advances, new or previously implemented features can be miniaturised, rendering smaller terminals. This concerns e.g. battery technology and electronics. Still, there is only so much space in a terminal, and in order to be competitive the elements of the terminal must be carefully packaged. Built-in antennas of different types have eliminated the need for protruding antenna elements, but the most frequently used type of built-in antennas, the so called PIFA (Planar Inverted-F Antenna), will instead add to the height of the terminal since it must be placed a certain distance from the PCB ground plane in order to provide a sufficient bandwidth.

A trend within the fields of mobile telephony and pocket computers such as Personal Digital Assistants PDAs, is to implement larger displays serving as data output interfaces. This is particularly interesting with the transmission schemes which make it possible to transmit and present video. Furthermore, such displays may also be touch-sensitive and serve as data input interfaces, preferably operated by means of a pen-like member. Still, it is recognised that many users prefer the traditional keypad, at least as a complement to the touch-sensitive display, with distinct separate keys which in many cases are considered to be easier to operate with the fingers. However, the keypad has the disadvantage of occupying space on a face surface of the terminal, space that e.g. could have been used to implement a larger display.

WO 00/54479 discloses a mobile phone which comprises an optical display for visually outputting data and a built-in keyboard for manually inputting data. The document targets the problem of known built-in keyboards being small and inconvenient. The proposed solution is therefore to equip the mobile telephone with a keyboard extension which is flexible and can be integrated into the mobile telephone. A preferred embodiment relates to a roll-out keyboard which when in use can be extended to a multiple of the surface of the mobile telephone and when not in use is drawn into the mobile telephone by means of a spring mechanism.

DE 19546786 A1 discloses a portable information storing device, which includes a housing in book form accommodating data memory, data output unit, data display unit, computer for controlling data output and display, keyboard, connections, and power supply or battery. In one embodiment, the device includes a keypad arranged on a foil-like carrier, which is extractable by a linear movement from a storage space of the housing.

US 2001/0003450 A1 discloses an electronic input device which has a flexible keyboard for receiving user input, and a housing defining a space for accommodating the keyboard. The input device has a compacted state and an extended state. The keyboard adopts a compacted spatial configuration in the compacted state and adopts an extended spatial configuration in the second state. In the compacted state the keyboard is wound on a roll, and the keyboard is extractable from the roll by a linear movement.

### Summary of the invention

Hence, it is an object of the present invention to provide a compact design for a terminal devised with a keypad as a data input interface and a display as a data output interface. An aspect of that object is to provide a design of a terminal with an extractable rolled-up keypad, which is easier to use than prior art solutions. The invention therefore relates to a terminal comprising a terminal body, a data output interface including a display disposed on a face of said terminal body, and a data input interface including a keypad, which is extractable from a storage space inside said terminal body by a linear movement, wherein said keypad is disposed on a flexible film, supported by a pulley comprising retractor means, biased to retract said film into said storage space.

According to a first aspect, the stated object is fulfilled by said terminal body comprising activator means for applying an electrical current through said film, wherein said film comprises a material which is devised to change from a flexible mode to a stiff mode upon said current application.

According to a second aspect, the stated object is fulfilled by the flexible film being curved to a shallow U-shape in a cross-section transverse the longitudinal extension of the film, when extracted from said storage space, wherein the film will automatically maintain a straight shape outside the terminal.

The detailed description shows specific features of various embodiments related to the aspects above.

### Brief description of the drawings

The present invention will now be described in more detail with reference to preferred embodiments, given only by way of example and illustrated in the accompanying drawings, in which:
Fig. 1 schematically illustrates a perspective view of a first terminal usable for understanding the invention;
Fig. 2 illustrates the terminal of Fig. 1 in a first state, with its keyboard stowed;
Fig. 3 illustrates the terminal of Fig. 1 in a second state, with the keyboard in an operative position;
Figs 4 schematically illustrates a second terminal usable for understanding the invention, with its keyboard stowed;
Fig. 5 illustrates the terminal of Fig. 4 when the keyboard has been extracted;
Fig. 6 illustrates , the terminal of Fig. 4 when the keyboard has been extracted and rotated;
Fig. 7 schematically illustrates a perspective view of an embodiment of the invention; and
Fig. 8 illustrates the terminal of Fig. 7 when the keyboard has been extracted.

### Detailed description of preferred embodiments

The present description relates to the field of data communication or processing devices, having a data input interface comprising a keypad and a data output interface comprising a display. The data communication or processing devices are in short denoted terminal in this disclosure, and includes all mobile equipment devised for radio communication with a radio station, which radio station also may be mobile terminal or e.g. a stationary base station. Consequently, the term terminal includes data communication devices such as mobile telephones, pagers, communicators, electronic organisers, smartphones, PDAs (Personal Digital Assistants) and DECT terminals (Digital Enhanced Cordless Telephony). Furthermore, it should be emphasised that the term comprising or comprises, when used in this description and in the appended claims to indicate included features, elements or steps, is in no way to be interpreted as excluding the presence of other features, elements or steps than those expressly stated.

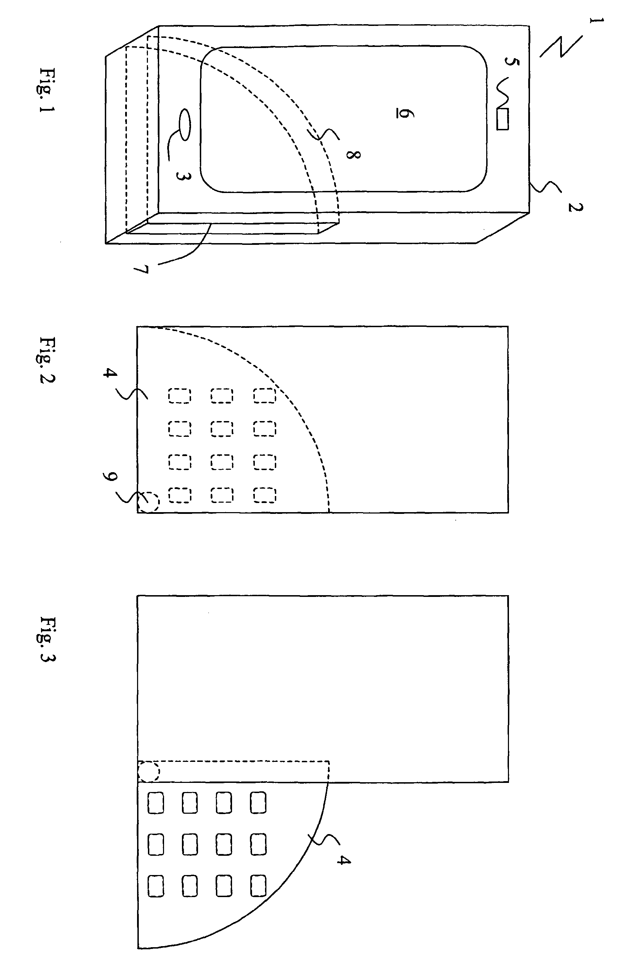

Exemplary embodiments will now be described with references made to the accompanying drawings. Figs 1-6 illustrate examples of terminals which are helpful for understanding the invention, but do not form part of the invention.

Fig. 1 illustrates a perspective view of a terminal 1, such as a radio communication terminal. The terminal 1 comprises a terminal body 2 carried in a chassis, directly or indirectly supporting the other components of the terminal. The terminal body 2 is defined by a front face, illustrated in the drawing, and a back face opposite to the front face. Terminal 1 is devised with a user-input interface, in the displayed embodiment comprising a microphone 3 and a keypad 4, although keyboard 4 has been eliminated in Fig. 1 for the sake of clarity. Furthermore, a user output interface of the terminal 1 comprises a loudspeaker 5 and a display 6, preferably disposed on a front face of the terminal body 2. The display 6 may also be touch-sensitive, thereby acting also as a data input interface. All of these features are well known in the prior art. Though not shown in Fig. 1, terminal 1 preferably further includes an antenna, radio transmission and reception electronics, and preferably a power supply in the form of a battery. Terminal 1 is also devised with a computer system, including a microprocessor with associated memory and software.

As is evident from Fig. 1, the chassis or cover of terminal 1 forms an aperture or recess 7 on a side of the terminal, between the front and back faces of the terminal body 2. This recess opens to a storage space 8 inside the terminal body 2, shown in phantom in Fig. 1. This storage space 8 is devised to house the keypad 4 when not in use. Furthermore, keypad 4 is extractable from storage space 8 to an operative position, in which it is accessible for a terminal user, as will be described.

Fig. 2 illustrates terminal 1 as seen from the front face, with keypad 4 illustrated in a stowed position. Keypad 4 is preferably shaped to fit in the storage space 8. Keyboard 4 is mounted to the terminal body 2 via a hinge device 9, such as a rotation shaft, about which keyboard 4 is rotatable. Though not shown, a first latch is preferably included to securely but releasably hold keyboard 4 in the stowed position shown in Fig. 2.

Fig. 3 illustrates terminal 1 when the keyboard 4 has been extracted from storage space 8, by rotation, to the operative position. In this specific terminal, the keyboard is positioned beside the terminal body 2 in the operative position, but as the skilled person realises the terminal may likewise be arranged such that keyboard 4 is rotated to a position below the terminal body 2. As for the stowed position, a second latch, is preferably included to securely but releasably hold keyboard 4 in the operative position shown in Fig. 3.

Means are by necessity included for linking the keys of keyboard 4 to the circuitry of the terminal body 2, for the purpose of relaying input data to the microprocessor of the terminal. The specific way of implementing such an electrical connection is not relevant to the understanding of this terminal, though.

The terminal illustrated in Figs 1 to 3 has the benefit of providing more space on the front face of the terminal for the display, compared with design in which the keyboard is firmly disposed on said front face. Furthermore, the keyboard will be safely stowed when not used, thereby rendering a solid construction. Compared to solutions in which the keyboard is devised on a flip, or on a so called clamshell member of the terminal, the keyboard can be completely tucked away when not in use, which means that a more compact design is provided. Extraction of the keyboard may be manual, by simply applying a pulling force on a knob (not shown) on the part of the keyboard positioned by the recess 7 in the stowed position, overcoming the retaining force of said first latch. Optionally, the keypad 4 may be biased by a spring device to assume the operative position, wherein a release button or the like is included for releasing said first latch.

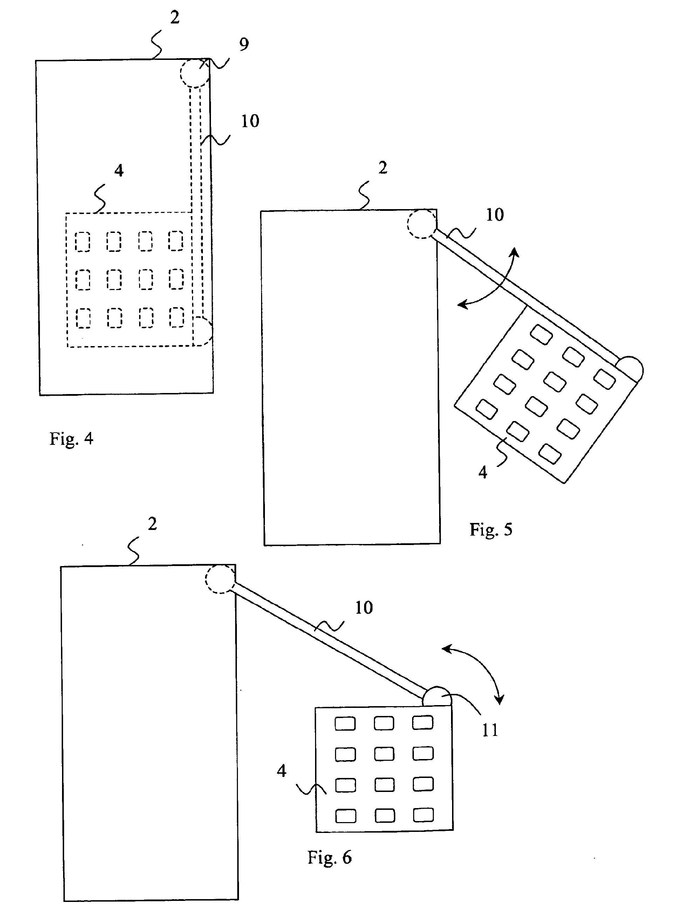

Fig. 4 illustrates another terminal 1, apart from the features relating to the keypad comprising the features outlined in conjunction with Fig. 1. The same references are used for corresponding items. In this terminal, keyboard 4 is connected to the terminal body 2 via a lever 10, connected by hinge device 9 to the terminal body 2. Fig. 4 illustrates the stowed state or position of keyboard 4.

Fig. 5 illustrate that when keyboard 4 is extracted to the operative position outside terminal body 2, the lever is rotated about a rotation axis defined by hinge device 9, as is indicated by the arrow in the drawing. As for the first terminal, extraction may be manual or include a biased spring device.

Fig. 6 illustrates how keyboard 4, once it has been extracted, may be freely rotated about a point of articulation 11, at which lever 10 is connected to keyboard 4. This is illustrated by the arrow in the drawing. This way, any angular orientation of keypad 4 in relation to terminal body 2 may be assumed, though the rotation of keypad 4 may be restricted to a range of degrees.

A benefit with this terminal is that the orientation of keypad 4 is freely set. This brings about the effect that the keyboard may be arranged adjacent one of the longer of the sides of the terminal 1, as in Fig. 6, and further be rotated such that the terminal body 2 may be held above the keypad 4. In such an orientation, the display 6 of the terminal will be arranged in a laptop-like manner, i.e. in an orientation where the width of the display 6 is larger than the height, which for certain applications may be preferred, such as for writing.

With a design according to Figs 4 to 6, the recess 7 opening into the storage space 8, none of which are illustrated in Figs 4 to 6, will either have to be larger than what is shown in Fig. 1, in order to house lever 10, or lever 10 may be arranged outwardly of terminal body 2.

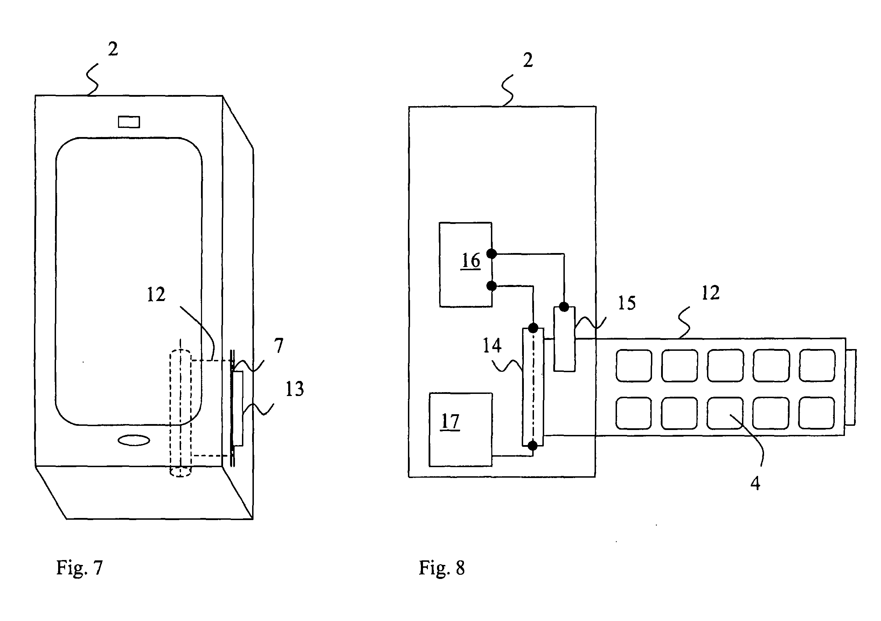

Fig. 7 illustrates an embodiment of the invention. Terminal 1 corresponds to the drawing of Fig. 1, apart from the features related to the keyboard, and are not repeated here. Terminal body 2 has a recess or slot 7, leading to a storage space 8 for keypad 4. In this case, the keypad 4 is disposed on a film 12, which is flexible at least in its rested state. Preferably a gripping portion 13 of film 12 extends outside the slot 7, even in the rested, stowed, state of the keypad 4. In one embodiment, the material of film 12 is such that certain atoms in the material are dislocated when an electrical current is passed through the material, upon which the film 12 transforms from its flexible state to a stiff state. A film having these properties is preferably made from a polymer, and is known as such.

Fig. 8 illustrates the interior of the terminal body 2, when keyboard 4 has been extracted from the terminal body 2. A pulley 14 is arranged for rolling up the film 12 when in its rested state. The terminal body comprises activator means 15 for applying an electrical current through said film, wherein said film is devised to become stiff upon said current application. The activator means 15 preferably has two or more connection pads arranged in contact with a surface of the film 12.

The pulley 14 includes a roller and retractor means, which are biased to retract said film 12 into said storage space 8. This may function like a window shade. Preferably, detector means 16 are connected to the pulley 14, and devised to detect when said film 12 has been extracted to a fully extracted position, as illustrated in Fig. 8. When this position is detected, said detector means 16 trigger the activator means 15 to apply an electrical through said film. This way the film 12 stiffens in the extracted position, making it easier to operate for a user. Preferably, said pulley 14 is locked when the film as reached the extracted position.

In order to bring the film back to the storage space 8, a pulling force is applied to the film 12. Said detector means 16 are devised to detect when a pulling force is applied on said film e.g. at the gripping portion 13, when the film is located in said fully extracted position, whereupon the detector means 16 controls the activator means 15 to stop applying a current through the film 12. This way, the film 12 becomes flexible again. The pulling force also unlocks the pulley and releases a biased spring device which pulls the film back around the roller of the pulley 14. The keys of the keypad 4 are connected to the microprocessor system 17 of the terminal, e.g. through said pulley 14.

In an alternative embodiment of the invention to that which is shown in Figs 7 and 8, the flexible film may be designed to stiffen by means of its shape. Such an embodiment may be based on a measuring-tape design, in which the film is slightly curved to e.g. a shallow U-shape, in a cross-section transverse the longitudinal extension of the film. By maintaining this shape outside the terminal, the film will automatically maintain a straight shape, unless intentionally bent. In such an embodiment, slot 7 may be curved to said shallow U-shape. The film may be made in any suitable material, such as plastics or metal. For a metal embodiment, the film 12 itself may be used as one lead to each of the keys 4 disposed thereon. Preferably, metal film 12 is covered by a rubber coat or the like, in which the key switches are embedded. In order to save weight, the film 12 may be made in a polymer or plastic material, having metal edge portions at least on the longer side portions of the film. Also in such an embodiment may the metal parts of the film be used as a lead to the respective keys 4 on the film 12.

As for the embodiments of the previous figures, the keypad 4 may of course be extracted from any side of the terminal body 2.

The foregoing has described the principles, preferred embodiments and modes of operation of the present invention. However, the invention should not be construed as being limited to the particular embodiments discussed above. For one thing, the keypad may be numerical but in an alternative embodiment, the keypad is alpha-numerical, also providing the capability of input of letters or other symbols. The above-described embodiments should be regarded as illustrative rather than restrictive, and it should be appreciated that variations may be made in those embodiments by workers skilled in the art without departing from the scope of the present invention, as defined by the following claims.

## Claims

1. Terminal (1), comprising a terminal body (2), a data output interface including a display (6) disposed on a face said terminal body, and a data input interface including a keypad (4), which is extractable from a storage space (8) inside said terminal body by a linear movement, wherein said keypad is disposed on a flexible film (12), supported by a pulley (14) comprising retractor means, biased to retract said film into said storage space, **characterised in that** said terminal body comprises activator means (15) for applying an electrical current through said film, wherein said film comprises a material which is devised to change from a flexible mode to a stiff mode upon said current application.

2. The terminal as recited in claim 1, **characterised in that** said terminal body has a front face supporting said display, and a back face opposite said front face, wherein said keypad is extractable from an aperture (7) disposed at a side of said terminal between said front face and said back face.

3. The terminal as recited in claim 1, **characterised in that** said keypad comprises a gripping portion (13) at an outer end of said film.

4. The terminal as recited in claim 1, **characterised in that** said pulley is devised to retract and roll up said film, when in a flexible mode, about a roller.

5. The terminal as recited in claim 1, **characterised in that** detector means (16) are devised to detect when said film has been extracted from said storage space to a fully extracted position, whereupon said detector means trigger said activator means to apply an electrical through said film.

6. The terminal as recited in claim 1, **characterised in that** said pulley comprise means for locking said retractor means when said film has been extracted from said storage space to a fully extracted position.

7. The terminal as recited in claim 5, **characterised in that** said detector means are devised to detect when a pulling force is applied on said film when the film is located in said fully extracted position, whereupon said detector means controls said activator means to stop applying a current to said film.

8. Terminal (1), comprising a terminal body (2), a data output interface including a display (6) disposed on a face of said terminal body, and a data input interface including a keypad (4), which is extractable from a storage space (8) inside said terminal body by a linear movement, wherein said keypad is disposed on a flexible film (12), supported by a pulley (14) comprising retractor means, biased to retract said film into said storage space, **characterised in that** the flexible film is curved to a shallow U-shape in a cross-section transverse the longitudinal extension of the film, when extracted from said storage space, wherein the film will automatically maintain a straight shape outside the terminal.

9. The terminal as recited in claim 8, **characterised in that** the flexible film is extractable through a slot (7), which is curved to said shallow U-shape.

10. The terminal as recited in claim 1 or 8, **characterised in that** said terminal is a radio communication terminal.

## Patentansprüche

1. Datenendgerät (1), umfasend ein Datenendgerätgehäuse (2), eine Datenausgangsschnittstelle mit einer Anzeige (6), die auf der Vorderseite des Datenendgerätgehäuse angebracht ist, und eine Dateneingangsschnittstelle mit einer Tastatur (4), die aus einem Aufbewahrungsraum (8) im Datenendgerätgehäuse durch eine lineare Bewegung herausziehbar ist, wobei sich die Tastatur auf einer flexiblen Folie (12) befindet, die durch eine Rolle (14) unterstüzt wird, die eine vorgespannte Retraktoreinrichtung umfasst, um die Folie in den Autbewahrungsraum zurückzuziehen, **dadurch gekennzeichnet, dass** das Datenendgerätgehäuse eine Aktivatoreinrichtung (15) für die Zufuhr von elektrischem Strom durch die Folie umfasst, wobei die Folie ein Material enthält, das gestalter ist, um sich bei der aktuellen Anwendung von einem flexiblen Modus in einen starren Modus zu ändern.

2. Datenendgerät gemäß Anspruch 1, **dadurch gekennzeichnet, dass** das Datenendgerätgehäuse eine Vorderseite aufweist, die die Anzeige enthält, und eine der Vorderseite abgewandte Rückseite, wobei die Tastatur aus einer Öffnung (7) herausziehbar ist, die sich an der Seite des Datenendgeräts zwischen der Vorderseite und der Rückseite befindet.

3. Datenendgerät gemäß Anspruch 1, **dadurch gekennzeichnet, dass** die Tastatur einen Greifabschnitt (13) an einer Außenkante der Folie umfasst.

4. Datenendgerät gemäß Auspruch 1, **dadurch gekennzeichnet, dass** die Rolle gestaltet ist, die Folie zurückzuziehen und eine Walze aufzurollen, wenn sich diese im flexiblen Modus befindet.

5. Datenendgerät gemäß Anspruch 1, **dadurch gekennzeichnet, dass** die Erfassungseinrichtungen (16) zur Erfassung gestaltet sind, ob die Folie aus dem Aufbewahrungsraum auf eine vollständig ausgezogene Position herausgezogen wird, wobei die Erfassungseinrichtungen dann die Aktivatoreinrichtung auslösen, um Strom durch die Folie zu leiten.

6. Datenendgerät gemäß Anspruch 1, **dadurch gekennzeichnet, dass** die Rolle eine Einrichtung umfasst, um die Retraktoreinrichtung zu sperren, wenn die Folie aus dem Aufbewahrungsraum auf eine vollständig ausgezogene Position ausgezogen wurde.

7. Datenendgerät gemäß Anspruch 1, **dardurch gekennzeichnet, dass** die Erfassengseinrichtungen gestaltet sind, um zu erfassen, ob auf die Folie eine Zugkraft ausgeübt wird, wenn sich die Folie in einer vollständig herausgezogenen Position befindet, worauf dann die Erfassungseinrichtung die Aktivatoreinrichtung steuert, um die Zufuhr von Strom auf die Folie zu beenden.

8. Datenendgerät (1), umfassend ein Datenendgerätgehäuse (2), eine Datenausgangsschnittstelle mit einer Anzeige (6), die auf der Vorderseite des Datenendgerätgehäuses angebracht ist, und eine Dateneingangsschmittstelle mit einer Tastatur (4), die aus einem Aufbewahrungsraum (8) im Datenendgerätgehäuse durch eine lineare Bewegung herausziehbar ist, wobei sich die Tastatur auf einer flexiblen Folie (12) befindet, die durch eine Rolle (14) unterstützt wird, die eine vorgespannte Retraktoreinrichtung umfasst, um die Folie in den Aufbewahrungsraum zurückzuziehen, **dadurch gekennzeichnet, dass** die flexible Folie in einer flachen U-Form in einem Querschnitt quer zur Längsausdehnung der Folie gebogen ist, wenn diese aus dem Aufbewahrungsraum herausgezogen ist, wobei die Folie automatisch eine gerade Form außerhalb des Datenendgeräts annimmt.

9. Datenendgerät gemäß Anspruch 8, **dadurch gekennzeichnet, dass** die flexible Folie durch einen Schlitz (7) herausziehbar ist, der in der flachen U-Form gebogen ist.

10. Datenendgerät gemäß Anspruch 1 oder 8, **dadurch gekennzeichnet, dass** das Datenendgerät ein Funkkommunikations-Datenendgerät ist.

## Revendications

1. Terminal (1) comprenant un corps de terminal (2), une interface de sortie de données incluant un afficheur (6) disposé sur une face dudit corps de terminal et une interface d'entrée de données incluant un clavier (4), qui est extractible d'un espace de stockage (8) à l'intérieur dudit corps de terminal par un mouvement linéaire, dans lequel ledit clavier est disposé sur un film flexible (12) supporté par une poulie (14) comprenant un moyen de rétraction chargé initialement pour rétracter ledit film dans ledit espace de stockage, **caractérisé en ce que** ledit corps de terminal comprend un moyen d'activation (15) servant à appliquer un courant électrique sur ledit film, dans lequel ledit film comprend un matériau qui est conçu pour passer d'un mode flexible à un mode rigide lors de l'application dudit courant.

2. Terminal selon la revendication 1, **caractérisé en ce que** ledit corps de terminal a une face avant supportant ledit afficheur et une face arrière opposée à ladite face avant, dans lequel ledit clavier est extractible par une ouverture (7) disposée sur un côté dudit terminal entre ladite face avant et ladite face arrière.

3. Terminal selon la revendication 1, **caractérisé en ce que** ledit clavier comprend une partie de préhension (13) sur une extrémité extérieure dudit film.

4. Terminal selon la revendication 1, **caractérisé en ce que** ladite poulie est conçue pour rétracter et enrouler ledit film, lorsqu'il est en mode flexible, sur un rouleau.

5. Terminal selon la revendication 1, **caractérisé en ce que** des moyens de détection (16) sont conçus pour détecter lorsque ledit film a été extrait dudit espace de stockage sur une position entièrement extraite, auquel cas lesdits moyens de détection déclenchent ledit moyen d'activation pour appliquer un courant électrique sur ledit film.

6. Terminal selon la revendication 1, **caractérisé en ce que** ladite poulie comprend un moyen pour bloquer ledit moyen de rétraction lorsque ledit film a été extrait dudit espace de stockage sur une position entièrement extraite.

7. Terminal selon la revendication 5, **caractérisé en ce que** des moyens de détection (16) sont conçus pour détecter lorsqu'une force de traction est appliquée sur ledit film lorsque le film se trouve dans ladite position entièrement extraite, auquel cas lesdits moyens de détection commandent ledit moyen d'activation pour arrêter l'application d'un courant audit film.

8. Terminal (1) comprenant un corps de terminal (2), une interface de sortie de données incluant un afficheur (6) disposé sur une face dudit corps de terminal et une interface d'entrée de données incluant un clavier (4), qui est extractible d'un espace de stockage (8) à l'intérieur dudit corps de terminal par un mouvement linéaire, dans lequel ledit clavier est disposé sur un film flexible (12) supporté par une poulie (14) comprenant un moyen de rétraction chargé initialement pour rétracter ledit film dans ledit espace de stockage, **caractérisé en ce que** ledit film est incurvé à une forme en U superficielle dans une section transversale en travers de l'extension longitudinale du film, lorsqu'il est extrait dudit espace de stockage, dans lequel le film maintient automatiquement une forme droite en dehors du terminal.

9. Terminal selon la revendication 8, **caractérisé en ce que** le film flexible est extractible par une fente (7), qui est incurvée à ladite forme en U superficielle.

10. Terminal selon la revendication 1 ou 8, **caractérisé en ce que** ledit terminal est un terminal de radiocommunications.
